# FASCICULE DE BREVET EUROPEEN

(11) **EP 3 058 210 B1**
(45) Date de publication et mention de la délivrance du brevet: **19.02.2020**
(21) Numéro de dépôt: 14824866.9
(22) Date de dépôt: 10.10.2014
(51) Int. Cl.: F02K 9/64

(54) **CHAMBRE DE PROPULSION POUR FUSÉE ET PROCÉDÉ DE FABRICATION D'UNE TELLE CHAMBRE**
ANTRIEBSKAMMER FÜR EINE RAKETE UND VERFAHREN ZUR HERSTELLUNG SOLCH EINER KAMMER
PROPULSION CHAMBER FOR A ROCKET AND METHOD FOR PRODUCING SUCH A CHAMBER

(30) Priorité: 16.10.2013 FR 1360067
(43) Date de publication de la demande: 24.08.2016
(73) Titulaire: ArianeGroup SAS, 75015 Paris (FR)
(72) Inventeur: GAZAVE, Robert, F-27510 Panilleuse (FR)
(74) Mandataire: Cabinet Beau de Loménie
(86) Numéro de dépôt international: PCT/FR2014/052588
(87) Numéro de publication internationale: WO 2015/055924

(56) Documents cités:
- EP-A1- 0 421 865
- DE-A1-102010 043 336
- US-A- 3 508 404
- US-B1- 7 854 395

## Description

### DOMAINE DE L'INVENTION

La présente invention a pour objet une chambre de propulsion pour fusée.

L'invention concerne plus particulièrement la structure d'une chambre de propulsion pour fusée et un procédé de fabrication d'une telle chambre de propulsion.

### ETAT DE LA TECHNIQUE ANTERIEURE

On connaît un type de chambre de propulsion pour fusée comportant une chambre de combustion métallique, en cuivre par exemple, dont l'épaisseur de la paroi de ladite chambre de combustion comporte un circuit de refroidissement dans lequel circule un des deux ergols. Dans la plupart des cas, la chambre de combustion métallique, refroidie par un circuit de refroidissement, comporte une enveloppe métallique de tenue à la pression, appelée « enveloppe structurale ».

Une telle chambre de combustion est prolongée par un divergent en matériau composite thermostructural qui ne comporte pas de circuit de refroidissement interne.

L'inconvénient principal de ce type de chambre de propulsion réside dans la difficulté de l'assemblage de la chambre de combustion métallique et du divergent en matériau composite thermostructural. En effet, il est complexe d'assurer une bonne liaison mécanique entre la chambre de combustion et le divergent car le métal et le matériau composite thermostructural ont des coefficients de dilatation différents.

Ce type de chambre de combustion présente également l'inconvénient d'être lourde et d'engendrer des coûts de fabrication importants.

Dans la publication de demande de brevet allemand DE 10 2010 043 336 A1, une chambre de propulsion a été divulguée qui comprend, autour de la chambre de combustion, une enveloppe de matériau composite thermostructural ainsi qu'une enveloppe de renfort externe. Toutefois, l'assemblage de cette chambre de combustion est relativement complexe.

### PRESENTATION DE L'INVENTION

Un but de la présente invention est de remédier au moins substantiellement aux inconvénients précités.

L'invention atteint son but en proposant un chambre de propulsion pour fusée comprenant une chambre de combustion, une paroi de la chambre de combustion comportant un circuit de refroidissement dans lequel circule un premier ergol, dans laquelle une enveloppe de matériau composite thermostructural d'une seule pièce est accolée extérieurement à ladite chambre de combustion et comporte un divergent s'étendant au-delà de l'extrémité inférieure de la chambre de combustion et au moins une partie de ladite enveloppe de matériau composite thermostructural est recouverte d'une enveloppe de renfort externe à forte résistance radiale pour contenir les déformations de la chambre de combustion et de ladite enveloppe de matériau composite thermostructural, l'enveloppe de matériau composite thermostructural et l'enveloppe de renfort externe formant un ensemble unitaire, ladite chambre de combustion prenant appui sur une butée fixée à une partie supérieure du divergent à l'intérieur de celui-ci.

On comprend que la chambre de combustion est entièrement logée dans l'enveloppe de matériau composite thermostructurale, ladite enveloppe de matériau composite thermostructural épousant en partie la forme de la chambre de combustion. Par exemple, l'enveloppe de matériau composite thermostructural peut être réalisée en composite carbone-silicium ou carbone-carbone.

On comprend également que l'enveloppe de matériau composite thermostructural est une pièce « monobloc » munie d'un divergent s'étendant au-delà de la chambre de combustion. Ainsi, grâce à cette solution, on s'affranchit du problème de raccordement du divergent à la chambre de combustion.

En outre, on comprend que la chambre de combustion est immobilisée dans l'enveloppe de matériau composite thermostructural par un système de fixation.

Par ailleurs, l'enveloppe de renfort externe recouvre de manière préférentielle la portion de l'enveloppe de matériau composite thermostructural disposée en vis-à-vis de la chambre de combustion. Cette enveloppe de renfort externe a pour but de limiter les déformations de la chambre de combustion et de l'enveloppe de matériau composite thermostructural, lesdites déformations étant dues à la pression générée dans la chambre de combustion. De façon avantageuse, l'enveloppe de renfort externe est également en matériau composite tel que du thermoplastique renforcé de fibres de carbone, ou tel qu'un bobinage ou un ensemble tissé de fibres de carbone incluses dans une résine solidifiée de préférence polyépoxydique ou phénolique.

Grâce à cette configuration, la chambre de combustion peut être insérée à l'intérieur de l'enveloppe de matériau composite thermostructural à travers le divergent, ce qui facilite la production de la chambre de propulsion par rapport à celles de l'état de la technique dans lesquelles la chambre de combustion devait être insérée à travers une ouverture dans l'extrémité supérieure de l'enveloppe de matériau composite thermostructural.

Par ailleurs, la chambre de combustion comprend successivement un dôme d'arrivée du deuxième ergol, un ensemble directeurs, une partie sensiblement cylindrique prolongée par une partie convergente et une partie divergente, une entrée du dôme d'arrivée du deuxième ergol constituant une extrémité supérieure de la chambre de combustion et étant raccordée à un conduit d'amenée d'un deuxième ergol. Ainsi, ce dôme d'arrivée du deuxième ergol surmonte la partie sensiblement cylindrique de la chambre de combustion et est raccordé à l'ensemble d'injecteurs.

On comprend alors que le conduit d'amenée du deuxième ergol est raccordé à l'extrémité supérieure de la chambre de combustion, cette dernière traversant un trou ménagé dans l'ensemble unitaire.

L'enveloppe de matériau composite thermostructural peut aussi comprendre un dôme surmontant le dôme de la chambre de combustion. Ainsi, le dôme de l'enveloppe monobloc de matériau composite thermostructural renforce aussi le dôme d'arrivée du deuxième ergol de la chambre de combustion.

En particulier, la chambre de combustion peut être immobilisée dans ledit ensemble unitaire, entre une butée fixée à l'extrémité supérieure de la chambre de combustion traversée par ledit conduit d'arrivée du deuxième ergol et prenant appui au sommet dudit ensemble unitaire, et la butée fixée à la partie supérieure du divergent à l'intérieur de celui-ci.

La chambre de combustion est donc immobilisée axialement entre ces deux butées, à l'intérieur de l'ensemble unitaire.

Dans certains modes de réalisation, un tube d'entrée du premier ergol est connecté au circuit de refroidissement de la chambre de combustion et traverse une ouverture ménagée dans l'ensemble unitaire.

Dans certains modes de réalisation, le tube d'entrée du premier ergol débouche dans une cavité annulaire dont une face interne comprend une partie de la paroi de la chambre de combustion située à la jonction entre la partie convergente et la partie divergente de celle-ci.

Grâce à ces dispositions, avant d'être distribué dans le circuit de refroidissement, le premier ergol alimente tout d'abord la cavité annulaire, et se répartit de manière régulière tout autour de la chambre de combustion, dans la cavité annulaire, avant de pénétrer dans le circuit de refroidissement.

Dans certains modes de réalisation, la cavité annulaire est fermée par une virole qui est fixée par ses deux extrémités axiales à la paroi de la chambre de combustion, la virole étant entourée par l'ensemble unitaire et étant percée pour laisser passer l'extrémité du tube d'entrée du premier ergol. Par exemple, la paroi de la chambre de combustion peut être métallique.

Dans certains modes de réalisation la virole porte intérieurement un socle de fixation sur lequel est raccordée l'extrémité du tube d'entrée du premier ergol, le socle de fixation comportant une ouverture pour le passage du premier ergol.

Avantageusement, le tube d'entrée du premier ergol est fixé au socle de fixation, celui-ci étant de préférence métallique. Cette disposition permet d'éviter le raccordement du tube d'entrée métallique à l'ensemble unitaire.

Dans certains modes de réalisation, la virole porte intérieurement au moins deux embases sur chacune desquelles est fixée une patte de raccordement d'un vérin de pilotage à travers une ouverture ménagée dans l'ensemble unitaire, pour l'orientation de la chambre de propulsion.

De même, cette disposition permet d'éviter le problème de raccordement des pattes de raccordement métalliques sur l'ensemble unitaire.

Dans certains modes de réalisation, les deux pattes de raccordement sont décalées l'une par rapport à l'autre de 90° circonférentiellement.

Dans certains modes de réalisation, le circuit de refroidissement comprend :
- des canaux de refroidissement ménagés dans l'épaisseur de la paroi de la chambre de combustion, dans lesquels le premier ergol circule de bas en haut, ces canaux de refroidissement s'étendant entre la partie divergente de la chambre de combustion et un ensemble d'injecteurs agencé dans la partie supérieure de la chambre de combustion et,
- des canaux d'alimentation s'étendant dans l'épaisseur de la partie divergente de la chambre de combustion et dans lesquels le premier ergol circule de haut en bas, lesdits canaux d'alimentation communiquant à leurs extrémités supérieures avec la cavité annulaire par des perçages et avec l'ensemble des canaux de refroidissement par leurs extrémités inférieures.

De manière avantageuse, dans l'exemple, la paroi de la chambre de combustion comprend un revêtement métallique de faible épaisseur refermant et individualisant les canaux de refroidissement. Ce revêtement peut être réalisé, par exemple, par un dépôt électrolytique connu en soi.

En outre, on comprend qu'une fois le premier ergol arrivé dans la cavité annulaire, il est distribué dans le circuit d'alimentation. Pour ce faire, on comprend que les perçages assurant le passage du premier ergol de la cavité annulaire aux canaux d'alimentation sont ménagés dans la paroi de la chambre de combustion et plus précisément, dans ce cas, dans ledit revêtement métallique.

On comprend, en outre, que les canaux d'alimentation s'étendent sur une portion de la partie divergente de la chambre de combustion depuis leurs extrémités supérieures communiquant avec lesdits perçages. On comprend aussi qu'une partie du premier ergol arrivant à l'extrémité inférieure des canaux d'alimentation, avantageusement disposée à l'extrémité inférieure de la partie divergente de la chambre de combustion, remonte par le biais des canaux de refroidissement jusqu'à la partie supérieure de la chambre de combustion où est disposé l'ensemble directeurs.

Grâce à cette disposition, on assure une bonne répartition du premier ergol dans les canaux de refroidissement et ce, tout autour de la chambre de combustion.

Dans certains modes de réalisation, les canaux d'alimentation communiquent avec des orifices d'éjection permettant un écoulement du premier ergol.

On comprend que premier ergol est éjecté par les orifices d'éjection et vient s'écouter le long de la surface interne du divergent. Grâce à cette disposition, le divergent est refroidi par « film ».

De manière avantageuse, les orifices déjection sont disposés à l'extrémité inférieure desdits canaux d'alimentation.

Dans certains modes de réalisation, un joint d'étanchéité est disposé entre une paroi externe de la partie divergente de la chambre de combustion et une paroi interne en regard de l'enveloppe de matériau composite thermostructural.

Grâce à ces dispositions, le joint d'étanchéité évite que les gaz chauds de la chambre de combustion ne pénètrent dans l'interstice entre la paroi externe de la chambre de combustion et la paroi interne de l'enveloppe de matériau composite thermostructural. Le joint peut être remplacé par une résine de remplissage entre la chambre de combustion et l'enveloppe externe

Dans certains modes de réalisation, au moins une partie de l'enveloppe de renfort externe est formée d'un ensemble tissé de fibres de carbone enrobées dans une résine solidifiée, telle qu'une résine poly époxydique ou phénolique.

Dans certains modes de réalisation, au moins une partie de l'enveloppe de renfort externe est formée d'un bobinage de fibres de carbone incluses dans un enrobage de résine solidifiée.

Grâce à ces dispositions, on allège la structure de la chambre de propulsion tout en assurant un renfort résistant à la pression régnant dans la chambre de combustion.

Avantageusement, la résine permet d'obtenir une bonne adhérence de l'enveloppe de renfort externe à l'enveloppe de matériau composite thermostructural.

L'invention concerne également un procédé de fabrication d'une chambre de propulsion pour fusée, caractérisé en ce qu'il comprend les étapes suivantes :
- mettre en forme une enveloppe d'une seule pièce en matériau composite thermostructural comprenant un dôme, un tronçon sensiblement cylindrique se prolongeant par un tronçon tronconique,
- durcir ladite enveloppe,
- réaliser une enveloppe de renfort externe à forte résistance radiale sur une partie de ladite enveloppe de matériau composite thermostructural, l'enveloppe de matériau composite thermostructurale et l'enveloppe de renfort externe formant un ensemble unitaire à travers un divergent constitué par une portion inférieure dudit tronçon tronconique,
- insérer une chambre de combustion comprenant un circuit de refroidissement dans l'ensemble unitaire, et
- immobiliser axialement la chambre de combustion à l'intérieur de l'ensemble unitaire, avec une butée offrant appui à ladite chambre de combustion et fixée à la partie supérieure dudit divergent à l'intérieur de celui-ci, ledit divergent s'étendant au-delà d'une extrémité inférieure d'une partie divergente de la chambre de combustion.

L'ordre de certaines étapes peut être modifié.

De préférence, l'ensemble unitaire est tout d'abord fabriqué en parallèle de la chambre de combustion, la chambre de combustion étant ensuite insérée et immobilisée dans l'ensemble unitaire. Il existe nécessairement un jeu entre la chambre de combustion et l'ensemble unitaire qui est étanchéifié au niveau des remontées de gaz par une résine ou un matériau silicone.

Dans certains modes de mise en œuvre, l'invention concerne un procédé de fabrication d'une chambre de propulsion pour fusée comprenant en outre l'étape de passer l'ensemble unitaire à l'autoclave.

Cette étape a pour but d'inclure les fibres de carbone dans un enrobage de résine et de faire adhérer l'enveloppe de renfort externe à l'enveloppe de matériau composite thermostructural.

Le passage à l'autoclave permet en outre de solidifier l'enveloppe de renfort externe et de lui conférer la résistance radiale nécessaire.

Dans certains modes de mise en œuvre, l'invention concerne un procédé de fabrication d'une chambre de propulsion pour fusée comprenant l'étape de connecter un tube d'entrée d'un premier ergol au circuit de refroidissement de la chambre de combustion à travers une ouverture ménagée dans l'ensemble unitaire.

Dans certains modes de mise en œuvre, l'invention concerne un procédé de fabrication d'une chambre de propulsion pour fusée dans lequel au moins une partie de l'enveloppe de renfort externe est formée d'un ensemble tissé de fibres de carbone enrobées dans une résine solidifiée.

Dans certains modes de mise en œuvre, l'invention concerne un procédé de fabrication d'une chambre de propulsion pour fusée dans lequel au moins une partie de l'enveloppe de renfort externe est formée d'un bobinage de fibres de carbone incluses dans un enrobage de résine solidifiée.

La solidification de la résine résulte de l'étape de passage à l'autoclave.

Plusieurs modes de réalisation sont décrits dans le présent exposé. Toutefois, sauf précision contraire, les caractéristiques décrites en relation avec un mode ou exemple quelconque peuvent être appliquées à un autre mode ou exemple de réalisation.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :
- la figure 1 représente une vue en coupe en élévation d'une chambre de propulsion selon l'invention,
- la figure 2 est une vue de détail de la figure 1 représentant le tube d'entrée d'un premier ergol dans une cavité annulaire,
- la figure 3 est une vue partielle en perspective de la paroi de la partie divergente de la chambre de combustion, montrant des canaux d'alimentation et les extrémités inférieures des canaux de refroidissement,
- la figure 4 est une vue en partielle schématique avec arrachement selon la flèche IV de la figure 1 et,
- les figures 5A à 5G représentent une succession d'étapes de fabrication de la chambre de combustion de la figure 1.

### DESCRIPTION DETAILLEE D'EXEMPLES DE REALISATION

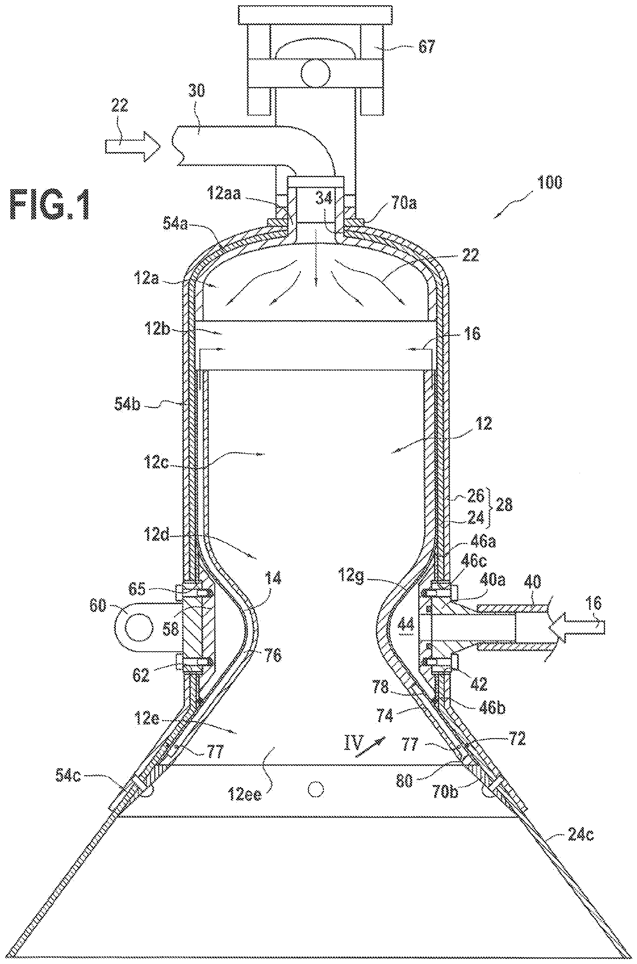

Une chambre de propulsion pour fusée selon l'invention est décrite en référence aux figures 1 à 4.

La figure 1 représente une vue en coupe en élévation d'une chambre de propulsion 100 selon invention. La chambre de propulsion 100 comporte une chambre de combustion métallique 12, en alliage de cuivre par exemple. La chambre de combustion 12 comprend successivement depuis sa partie supérieure jusqu'à sa partie inférieure, un dôme 12a, un ensemble d'injecteurs 12b, une partie sensiblement cylindrique 12c, une partie convergente 12d, et une partie divergente 12e. En outre, un circuit de refroidissement 14 dans lequel circule un premier ergol 16, de l'hydrogène liquide dans notre cas, est défini dans l'épaisseur de la paroi de la chambre de combustion 12.

Le circuit de refroidissement 14 est essentiellement formé de canaux comprenant des rainures usinées dans l'épaisseur de la paroi de la chambre de combustion 12. Dans cet exemple, la paroi de la chambre de combustion 12 comprend un revêtement 12g, métallique dans le cas présent, réalisé par exemple en nickel ou en un alliage métallique à base de cuivre, individualisant et étanchéifiant lesdits canaux en recouvrant les rainures.

En outre, le dôme 12a de la chambre de combustion 12 est alimenté par un deuxième ergol 22, de l'oxygène liquide dans le cas présent, comme on le verra par la suite.

Une enveloppe de matériau composite thermostructural 24 formée d'une seule pièce, en carbone-silicium par exemple, est accolée extérieurement à la chambre de combustion 12.

L'enveloppe de matériau composite thermostructural 24 comprend un dôme 54a, un tronçon sensiblement cylindrique 54b se prolongeant par un tronçon tronconique 54c. La portion de tronçon tronconique 54c s'étendant au-delà de l'extrémité inférieure 12ee de partie divergente 12e de la chambre de combustion 12 constitue un divergent 24c de la chambre de propulsion 100.

La chambre de propulsion 100 selon l'invention comprend en outre une enveloppe de renfort externe 26 recouvrant au moins une partie de l'enveloppe de matériau composite thermostructural 24. Dans cet exemple, l'enveloppe de renfort externe 26 recouvre la portion de l'enveloppe de matériau composite thermostructural 24 qui est en vis-à-vis du dôme 12a, de l'ensemble d'injecteurs 12b, des parties cylindrique 12c, convergente 12d et divergente 12e de la chambre de combustion 12 Dans le cas présent, l'enveloppe de renfort externe 26 est formée d'un bobinage de fibres de carbone incluses dans un enrobage de résine solidifiée.

Selon une variante, l'enveloppe 26 est formée d'un ensemble tissé de fibres de carbone enrobées de résine solidifiée.

Ainsi, l'enveloppe de matériau composite thermostructural 24 et l'enveloppe de renfort externe 26 forment un ensemble unitaire 28.

Un conduit d'amenée 30 du deuxième ergol 22 est raccordé à une entrée tubulaire 12aa du dôme 12a engagée dans un trou 34 ménagé dans la partie supérieure de l'ensemble unitaire 28.

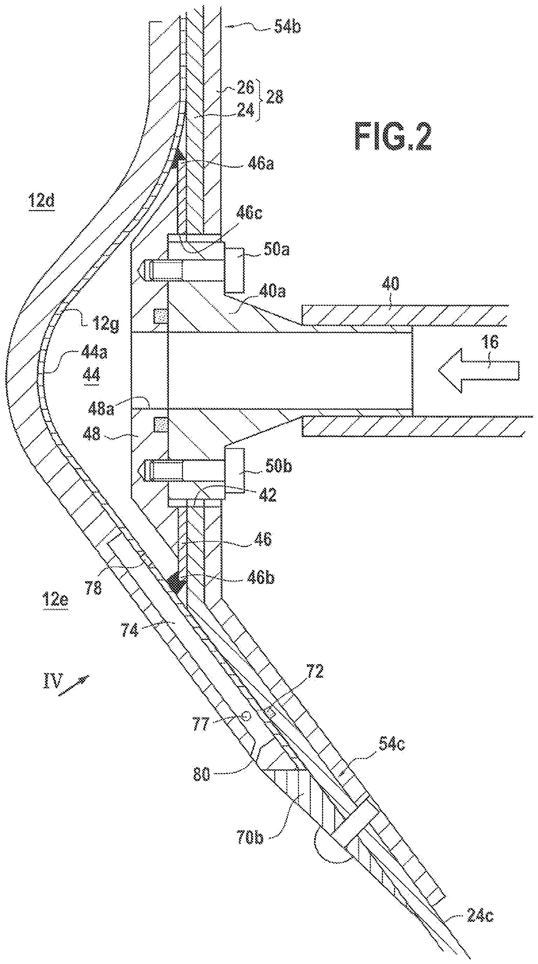

En outre, un tube d'entrée 40 du premier ergol 16, équipé à son extrémité d'une platine 40a, traverse l'ensemble unitaire 28 à travers une ouverture 42 ménagée dans l'ensemble unitaire 28 pour être raccordé au circuit de refroidissement 14. L'ouverture 42 est disposée en vis-à-vis de la jonction entre la partie convergente 12d et la partie divergente 12e de la chambre de combustion 12. Comme cela est représenté plus en détail sur la figure 2, le tube d'entrée 40 du premier ergol 16 muni de la platine 40a débouche dans une cavité annulaire 44 dont la face interne 44a comprend une partie de la paroi de la chambre de combustion 12 et plus précisément, ici, une partie du revêtement 12g de la paroi de la chambre de combustion 12.

La cavité annulaire 44 est fermée par une virole 46, métallique par exemple, qui est fixée par ses deux extrémités 46a et 46b, par soudure par exemple, au revêtement 12g de la paroi de la chambre de combustion 12, la virole 46 étant entourée de l'ensemble unitaire 28. Par ailleurs, la virole 46 est munie d'une ouverture 46c en vis-à-vis de l'ouverture 42 ménagée dans l'ensemble unitaire de sorte que la platine 40a pénètre à travers l'ouverture 46c de la virole 46. En outre, la face interne de la virole 46 porte un socle de fixation 48, métallique par exemple, sur lequel prend appui la platine 40a. Le socle de fixation 48 est également muni d'une ouverture 48a en vis-à-vis de l'ouverture 46c de la virole 46 afin de permettre le passage du premier ergol 16 dans la cavité annulaire 44. Puis, le tube d'entrée 40 est fixé au socle de fixation 48 par des vis 50a et 50b, par exemple, insérées dans la platine 40a et vissées respectivement dans un taraudage du socle de fixation 48.

La face interne de la virole 46 porte en outre deux embases 58 sur chacune desquelles est fixée une patte de raccordement 60 d'un vérin de pilotage. Chaque patte de raccordement 60 traverse respectivement une ouverture 62 ménagée dans l'ensemble unitaire 28 et une ouverture 65 ménagée dans la virole 46. De façon préférentielle, les deux pattes de raccordement 60, sont décalées de 90° ciconférentiellement afin d'obtenir un guidage optimal de la chambre de propulsion 100 qui est ensuite transmis par le biais d'un cardan 67 au reste de la fusée. C'est la raison pour laquelle une seule embase 58 et une seule patte de raccordement 60 sont visibles sur la figure 1.

La chambre de combustion 12 est fixée axialement dans l'ensemble unitaire 28 par le biais d'une première butée 70a et d'une deuxième butée 70b. Dans cet exemple, la première butée 70a est un écrou vissé à un taraudage ménagé à l'entrée 12aa du dôme 12a de sorte que ladite première butée 70a lorsqu'elle est vissée sur ledit taraudage est en appui sur l'ensemble unitaire 28. En outre, la deuxième butée 70b, ici une cale annulaire, est fixée sur la paroi interne de la partie supérieure du divergent 24c de sorte que la chambre de combustion 12 est en appui sur la deuxième butée 70b.

Par ailleurs, comme illustré sur les figures 1 et 2, un joint d'étanchéité 72 est disposé sous la cavité annulaire entre la paroi externe de la partie divergente 12e de la chambre de combustion 12 et la paroi interne de l'enveloppe de matériau composite thermostructural 24.

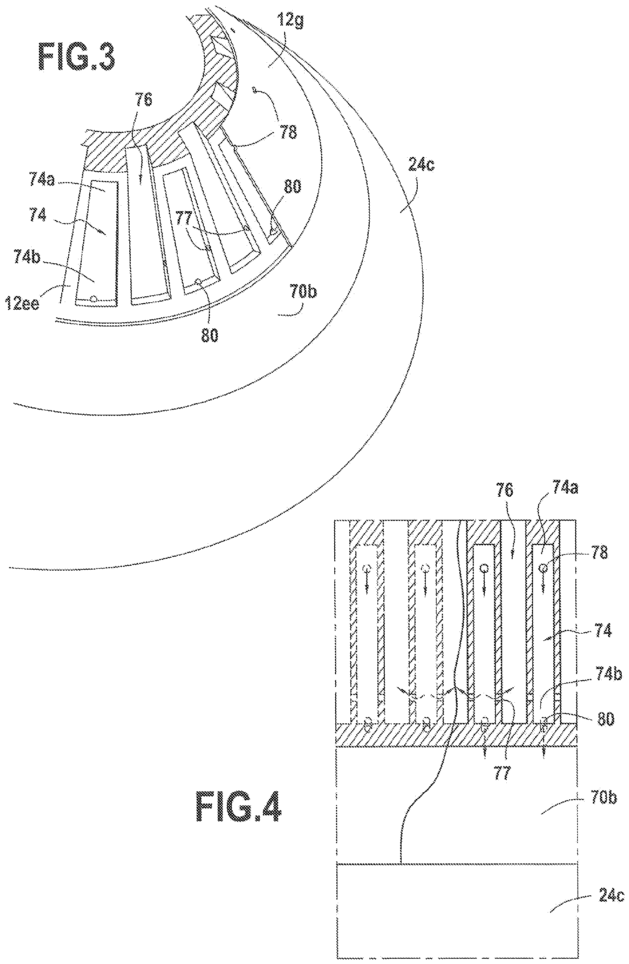

Comme mentionné précédemment, le circuit de refroidissement 14 de la chambre de propulsion 100 est défini dans l'épaisseur de la paroi de la chambre de combustion 12. Comme cela est illustré sur les figures 3 et 4, ledit circuit de refroidissement 14 comprend des canaux d'alimentation 74 et des canaux de refroidissement 76 qui sont usinés dans l'épaisseur de la paroi de la chambre de combustion 12.

Les canaux d'alimentation 74 s'étendent dans la partie divergente 12e de la chambre de combustion 12 et communiquent à leurs extrémités supérieures 74a avec la cavité annulaire 44 par des perçages 78 ménagés dans le revêtement 12g de la paroi de la chambre de combustion 12. Ainsi les canaux d'alimentation 74 s'étendent entre leurs extrémités supérieures 74a communiquant avec les perçages 78 et leurs extrémités inférieures 74b situées, dans cet exemple, sensiblement à l'extrémité inférieure 12ee de la partie divergente 12e de la chambre de combustion 12. Dans ces canaux d'alimentation 74, le premier ergol 16 circule de haut en bas.

Comme illustré sur les figures 3 et 4, une partie du premier ergol 16 est éjecté par des orifices d'éjection 80 débouchant le long de la surface interne du divergent 24c. Ainsi, le premier ergol s'écoule le long de la surface interne de la deuxième butée 70b puis s'écoule le long de la surface interne du divergent 24c.

Une autre partie du premier ergol 16 arrivant aux extrémités inférieures 74b des canaux d'alimentation 74 pénètre dans les canaux de refroidissement 76 via des passages 77 et remonte jusqu'à l'ensemble d'injecteurs 12b, le premier ergol 16 s'écoulant de bas en haut.

Les premier et deuxième ergols 16, 22, pénètrent dans l'ensemble d'injecteurs 12a pour y être mélangés. La combustion s'opère dans la partie cylindrique 12c de la chambre de combustion 12.

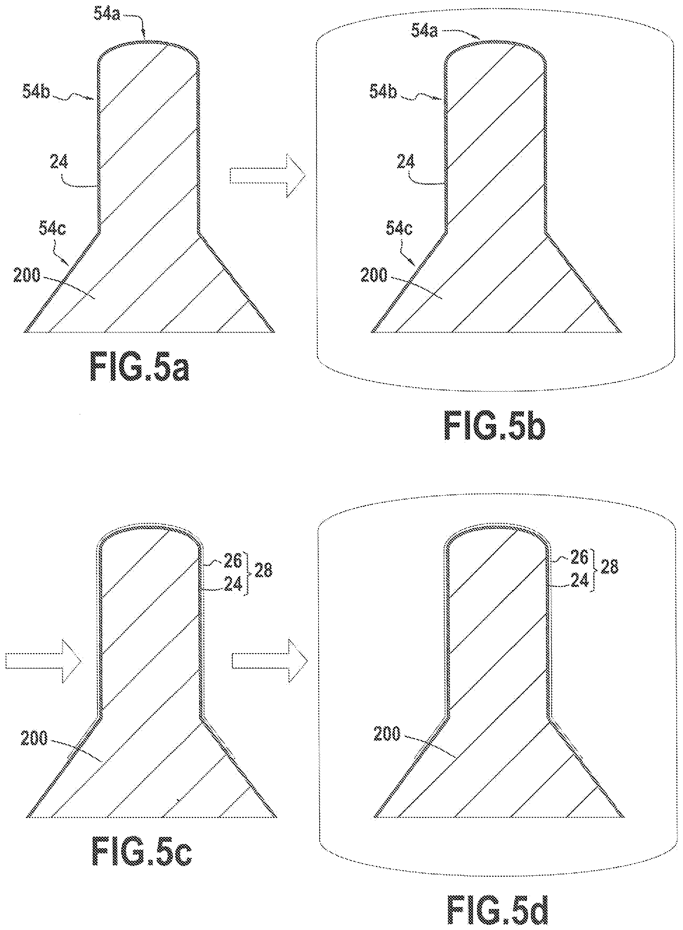

Selon un exemple de réalisation de l'invention, les figures 5a à 5g représentent les différentes étapes du procédé de fabrication de la chambre de propulsion selon l'invention.

La chambre de combustion 12 qui est réalisée de façon classique n'est pas détaillée ici, indépendamment du processus décrit ci-dessous.

Plus spécifiquement, la virole 46, formée à partir de deux demi-viroles ferme la cavité annulaire 44 de la chambre de combustion 12. Pour ce faire, au préalable, le socle de fixation 48 est fixé sur la face interne d'une demi-virole, les deux embases 58 étant également fixées à la face interne de l'autre demi-virole. Ainsi, les deux demi-viroles portant intérieurement le socle de fixation 48 et les deux embases 58 sont positionnées autour de la cavité annulaire 44 de la chambre de combustion 12 et sont soudées entre elles longitudinalement Puis, la virole 46 est soudée circonférentiellement au revêtement 12g de la paroi de la chambre de combustion 12 par ses deux extrémités 46a, 46b.

Lors d'une première étape du procédé de fabrication de la chambre de propulsion 100 (voir figure 5A), l'enveloppe de matériau composite thermostructural 24 est mise en forme à partir d'une pièce unique de matériau composite thermostructural. Pour ce faire, l'enveloppe de matériau composite thermostructurale 24 est mise en forme sur un moule 200 de sorte que l'enveloppe de matériau composite thermostructural 24 possède un dôme 54a, un tronçon sensiblement cylindrique 54b se prolongeant en un tronçon tronconique 54c.

Dans une seconde étape du procédé de fabrication (voir figure 5B), l'enveloppe de matériau composite thermostructural 24, toujours en position sur la préforme 200 est cuite, par pyrolyse, par exemple.

Dans une troisième étape du procédé de fabrication (voir figure 5C), l'enveloppe de renfort externe 26 à forte résistance radiale est réalisée sur une partie de l'enveloppe de matériau composite thermostructural 24. De façon préférentielle, l'enveloppe de renfort externe 26 est réalisée sur l'ensemble du dôme 54a, du tronçon cylindrique 54b et sur la partie supérieure du tronçon tronconique 54c de l'enveloppe de matériau composite thermostructural 24, de sorte que l'enveloppe de renfort externe 26 peut envelopper le dôme 12a, l'ensemble d'injecteurs 12b ainsi que les parties sensiblement cylindrique 12c, convergente 12d et divergente 12e de la chambre de combustion 12. Comme mentionné précédemment, l'enveloppe de renfort externe 26 peut être un bobinage de fibres de carbone enrobées dans de la résine ou un ensemble tissé de fibres de carbone incluses dans un enrobage de résine.

Dans une quatrième étape du procédé de fabrication (voir figure 5d), l'ensemble unitaire 28 formé des enveloppes de matériau composite thermostructural 24 et de renfort externe 26 est passé à l'autoclave pour réaliser la polymérisation de la résine de l'enveloppe de renfort externe 26. La polymérisation a pour effet d'amalgamer les fibres de carbone et la résine, et de faire adhérer l'enveloppe de renfort externe 26 à l'enveloppe de matériau composite thermostructural 24. La polymérisation a également pour but de solidifier l'enveloppe de renfort externe et de lui conférer la résistance radiale nécessaire.

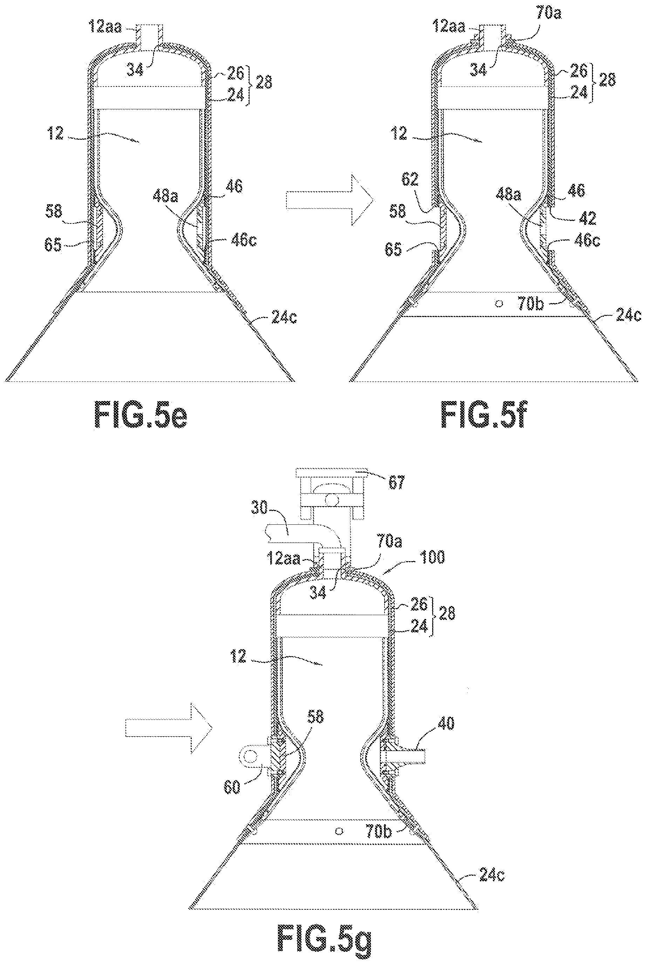

Dans une cinquième étape du procédé de fabrication (voir figure 5E), l'ensemble unitaire 28 est séparé du moule 200. La chambre de combustion 12 munie de la virole 46 est alors insérée par le divergent dans l'ensemble unitaire 28.

En outre, lorsque la chambre de combustion 12 munie de la virole 46 est insérée dans l'ensemble unitaire 28, il y a nécessairement un jeu entre la chambre de combustion 12 munie de la virole 46 et l'ensemble unitaire 28. Ledit jeu peut être comblé par une résine ou un matériau silicone au niveau des remontés de gaz.

En outre, avant l'introduction de la chambre de combustion, le trou 34 est ménagé dans l'ensemble unitaire 28 pour le passage de l'entrée 12aa du dôme 12a.

Dans une sixième étape du procédé de fabrication (voir figure 5F), la chambre de combustion 12 munie de la virole 46 est immobilisées axialement par les première et deuxième butées 70a et 70b.

L'ouverture 42 est aussi ménagée dans l'ensemble unitaire 28 en vis-à-vis de la jonction entre la partie convergente 12d et la partie divergente 12e de la chambre de combustion. On découvre ainsi les ouvertures 46c et 48a ménagées, respectivement, dans la virole 46 et le socle de fixation 48. On découvre également les trous 65 ménagés dans la virole 46. En outre, on ménage les ouvertures 62 dans l'ensemble unitaire 28.

Enfin, dans une septième étape du procédé de fabrication (voir figure 5G), le tube d'entrée 40 du premier ergol 16 est raccordé au circuit de refroidissement par l'intermédiaire de l'ouverture 42 de sorte qu'il prend appui sur le socle de fixation 48. En outre, les pattes de raccordement 60 sont respectivement positionnées sur les embases 58. Le conduit d'amenée 30 du deuxième ergol 22 est raccordé à l'entrée 12aa du dôme 12a. En outre, le cardan 67 est monté sur la chambre de propulsion.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Chambre de propulsion (100) pour fusée comprenant une chambre de combustion (12), qui comprend successivement un dôme (12a) d'arrivée d'un deuxième ergol, un ensemble d'injecteurs (12b), une partie sensiblement cylindrique (12c) prolongée par une partie convergente (12d) et une partie divergente (12e), une entrée du dôme (12a) d'arrivée du deuxième ergol constituant une extrémité supérieure (12aa) de la chambre de combustion (12) et étant raccordée à un conduit d'amenée (30) du deuxième ergol (22), une paroi de la chambre de combustion (12) comportant un circuit de refroidissement (14) dans lequel circule un premier ergol (16), dans laquelle une enveloppe de matériau composite thermostructural (24) d'une seule pièce est accolée extérieurement à ladite chambre de combustion (12) et comporte un divergent (24c) s'étendant au-delà de l'extrémité inférieure (12ee) de la chambre de combustion (12), au moins une partie de ladite enveloppe de matériau composite thermostructural (24) est recouverte d'une enveloppe de renfort externe (26) à forte résistance radiale pour contenir les déformations de la chambre de combustion (12) et de ladite enveloppe de matériau composite thermostructural (24), l'enveloppe de matériau composite thermostructural (24) et l'enveloppe de renfort externe (26) formant un ensemble unitaire (28), ladite chambre de combustion (12) prenant appui sur une butée (70b) fixée à une partie supérieure du divergent (24c) à l'intérieur de celui-ci, la chambre de propulsion (100) étant **caractérisée en ce que** l'enveloppe de matériau composite thermostructural (24) comprend aussi un dôme (54a) surmontant le dôme (12a) de la chambre de combustion (12).

2. Chambre de propulsion (100) selon la revendication 1, dans laquelle la chambre de combustion (12) est immobilisée dans ledit ensemble unitaire (28), entre une butée (70a) fixée à l'extrémité supérieure (12aa) de la chambre de combustion (12) traversée par ledit conduit d'amenée (30) du deuxième ergol (22) et prenant appui au sommet dudit ensemble unitaire (28) et la butée (70b) fixée à la partie supérieure du divergent (24c) à l'intérieur de celui-ci.

3. Chambre de propulsion (100) selon l'une quelconque des revendications 1 ou 2, dans laquelle un tube d'entrée (40) du premier ergol (16) est connecté au circuit de refroidissement (14) de la chambre de combustion (12) et traverse une ouverture (42) ménagée dans l'ensemble unitaire (28).

4. Chambre de propulsion (100) selon la revendication 3, dans laquelle le tube d'entrée (40) du premier ergol (16) débouche dans une cavité annulaire (44) dont une face interne (44a) comprend une partie de de la paroi de la chambre de combustion (12) située à la jonction entre la partie convergente (12d) et la partie divergente (12e) de la chambre de combustion (12).

5. Chambre de propulsion (100) selon la revendication 4, dans laquelle la cavité annulaire (44) est fermée par une virole (46) qui est fixée par ses deux extrémités axiales (46a, 46b) à la paroi de la chambre de combustion (12), la virole (46) étant entourée par l'ensemble unitaire (28) et étant percée pour laisser passer l'extrémité du tube d'entrée (40) du premier ergol (16).

6. Chambre de propulsion (100) selon la revendication 5, dans laquelle la virole (46) porte intérieurement un socle de fixation (48) sur lequel est raccordée l'extrémité du tube d'entrée (40) du premier ergol (16), le socle de fixation (48) comportant une ouverture (48a) pour le passage du premier ergol (16).

7. Chambre de propulsion (100) selon la revendication 5 ou 6, dans laquelle la virole (46) porte intérieurement au moins deux embases (58) sur chacune desquelles est fixée une patte de raccordement (60) d'un vérin de pilotage à travers une ouverture (62) ménagée dans l'ensemble unitaire (28).

8. Chambre de propulsion (100) selon la revendication 7, dans laquelle les deux pattes de raccordement (60) sont décalées l'une par rapport à l'autre de 90° circonférentiellement.

9. Chambre de propulsion (100) selon l'une quelconque des revendications 4 à 8, dans laquelle le circuit de refroidissement (14) comprend :
- des canaux de refroidissement (76) ménagés dans l'épaisseur de la paroi de la chambre de combustion (12), dans lesquels le premier ergol (16) circule de bas en haut, ces canaux de refroidissement (76) s'étendant entre l'extrémité inférieure (12ee) de la partie divergente (12e) de la chambre de combustion (12) et un ensemble d'injecteurs (12b) agencé dans la partie supérieure de la chambre de combustion (12) et,
- des canaux d'alimentation (74) dans l'épaisseur de la paroi de la chambre de combustion (12) s'étendant dans la partie divergente (12e) de la chambre de combustion (12) et dans lesquels le premier ergol (16) circule de haut en bas, lesdits canaux d'alimentation (74) communiquant à leurs extrémités supérieures (74a) par des perçages (78) avec la cavité annulaire (44) et avec l'ensemble des canaux de refroidissement (76) par leurs extrémités inférieures (74b).

10. Chambre de propulsion selon la revendication 9, dans laquelle les canaux d'alimentation (74) communiquent avec des orifices d'éjection (80) permettant un écoulement du premier ergol (16).

11. Chambre de propulsion selon l'une quelconque des revendications 1 à 10 dans laquelle un joint d'étanchéité (72) est disposé entre une paroi externe de la partie divergente (12e) de la chambre de combustion (12) et une paroi interne en regard de l'enveloppe de matériau composite thermostructural (24).

12. Chambre de propulsion (100) selon l'une quelconque des revendications 1 à 11, dans laquelle au moins une partie de l'enveloppe de renfort externe (26) est formée d'un ensemble tissé de fibres de carbone enrobées dans une résine solidifiée.

13. Chambre de propulsion selon l'une quelconque des revendications 1 à 12, dans laquelle au moins une partie de l'enveloppe de renfort externe (26) est formée d'un bobinage de fibres de carbone incluses dans un enrobage de résine solidifiée.

14. Procédé de fabrication d'une chambre de propulsion (100) pour fusée, **caractérisé en ce qu'**il comprend les étapes suivantes :
- mettre en forme une enveloppe d'une seule pièce en matériau composite thermostructural (24) comprenant un dôme (54a) et un tronçon sensiblement cylindrique (54b) se prolongeant par un tronçon tronconique (54c),
- durcir ladite enveloppe (24),
- réaliser une enveloppe de renfort externe (26) à forte résistance radiale sur une partie de ladite enveloppe de matériau composite thermostructural (24), l'enveloppe de matériau composite thermostructurale (24) et l'enveloppe à renfort externe (26) formant un ensemble unitaire (28),
- insérer une chambre de combustion (12) comprenant un circuit de refroidissement (14) dans l'ensemble unitaire (28) à travers un divergent (24c) constitué par une portion inférieure dudit tronçon tronconique (54c), et
- immobiliser axialement la chambre de combustion (12) à l'intérieur de l'ensemble unitaire (28), avec une butée (70b) offrant appui à ladite chambre de combustion (12) et fixée à la partie supérieure dudit divergent (24c) à l'intérieur de celui-ci, ledit divergent (24c) s'étendant au-delà d'une extrémité inférieure d'une partie divergente (12e) de la chambre de combustion (12).

15. Procédé de fabrication d'une chambre de propulsion (100) selon la revendication 14, comprenant en outre l'étape de passer l'ensemble unitaire (28) à l'autoclave.

16. Procédé de fabrication d'une chambre de propulsion (100) selon la revendication 14 ou 15, comprenant l'étape de connecter un tube d'entrée (30) d'un premier ergol (16) au circuit de refroidissement (14) de la chambre de combustion (12) à travers une ouverture (42) ménagée dans l'ensemble unitaire (28).

17. Procédé de fabrication d'une chambre de propulsion (100) selon l'une quelconque des revendications 14 à 16, dans lequel au moins une partie de l'enveloppe de renfort externe (26) est formée d'un ensemble tissé de fibres de carbone enrobées dans une résine solidifiée.

18. Procédé de fabrication d'une chambre de propulsion (100) selon l'une quelconque des revendications 14 à 17, dans lequel au moins une partie de l'enveloppe de renfort externe (26) est formée d'un bobinage de fibres de carbone incluses dans un enrobage de résine solidifiée.

## Patentansprüche

1. Antriebskammer (100) für eine Rakete, umfassend eine Brennkammer (12), die nacheinander eine Kuppel (12a) für den Einlass eines zweiten Treibstoffs, einen Satz von Injektoren (12b), einen im Wesentlichen zylindrischen Teil (12c), der durch einen konvergierenden Teil (12d) und einen divergierenden Teil (12e) verlängert ist, wobei ein Eingang der Kuppel (12a) für den Einlass des zweiten Treibstoffs ein oberes Ende (12aa) der Brennkammer (12) bildet und mit einer Zuleitung (30) des zweiten Treibstoffs (22) verbunden ist, wobei eine Wand der Brennkammer (12) einen Kühlkreislauf (14) umfasst, in dem ein erster Treibstoff (16) zirkuliert, wobei eine einteilige thermostrukturelle Verbundwerkstoffhülle (24) außerhalb der Brennkammer (12) befestigt ist und einen dirvergenten Abschnitt (24c) umfasst, der sich über das untere Ende (12ee) der Brennkammer (12) hinaus erstreckt, wobei mindestens ein Teil der thermostrukturellen Verbundwerkstoffhülle (24) durch eine äußere Verstärkungshülle (26) mit hoher radialer Festigkeit bedeckt ist, um Verformungen der Brennkammer (12) und der thermostrukturellen Verbundwerkstoffhülle (24) aufzunehmen, wobei die thermostrukturelle Verbundwerkstoffhülle (24) und die äußere Verstärkungshülle (26) eine Baueinheit (28) bilden, wobei die Brennkammer (12) auf einem Anschlag (70b) abgestützt ist, der an einem oberen Teil des darin befindlichen divergenten Abschnitts (24c) befestigt ist, wobei die Antriebskammer (100) **dadurch gekennzeichnet ist, dass** die thermostrukturelle Verbundwerkstoffhülle (24) auch eine Kuppel (54a) umfasst, die über der Kuppel (12a) der Brennkammer (12) liegt.

2. Antriebskammer (100) nach Anspruch 1, wobei die Brennkammer (12) in der Baueinheit (28) zwischen einem Anschlag (70a), der am oberen Ende (12aa) der Brennkammer (12) befestigt ist, durch den die Zuleitung (30) des zweiten Treibstoffs (22) verläuft und der an der Oberseite der Baueinheit (28) abgestützt ist, und dem Anschlag (70b), der am oberen Teil des divergenten Abschnitts (24c) in deren Innerem befestigt ist, immobilisiert ist.

3. Antriebskammer (100) nach einem der Ansprüche 1 oder 2, wobei ein Eingangsrohr (40) des ersten Treibstoffs (16) mit dem Kühlkreislauf (14) der Brennkammer (12) verbunden ist und durch eine in der Baueinheit (28) vorgesehene Öffnung (42) verläuft.

4. Antriebskammer (100) nach Anspruch 3, wobei das Eingangsrohr (40) des ersten Treibstoffs (16) in einen ringförmigen Hohlraum (44) mündet, dessen Innenfläche (44a) einen Teil der Wand der Brennkammer (12) umfasst, der sich an der Verbindung zwischen dem konvergierenden Teil (12d) und dem divergierenden Teil (12e) der Brennkammer (12) befindet.

5. Antriebskammer (100) nach Anspruch 4, wobei der ringförmige Hohlraum (44) durch eine Hülse (46) geschlossen ist, die mit ihren beiden axialen Enden (46a, 46b) an der Wand der Brennkammer (12) befestigt ist, wobei die Hülse (46) von der Baueinheit (28) umgeben ist und zur Durchführung des Endes des Eingangsrohres (40) des ersten Treibstoffs (16) durchbohrt ist.

6. Antriebskammer (100) nach Anspruch 5, wobei die Hülse (46) innen einen Befestigungssockel (48) trägt, an den das Ende des Eingangsrohrs (40) des ersten Treibstoffs (16) angeschlossen ist, wobei der Befestigungssockel (48) eine Öffnung (48a) für den Durchgang des ersten Treibstoffs (16) aufweist.

7. Antriebskammer (100) nach Anspruch 5 oder 6, wobei die Hülse (46) innen mindestens zwei Basisplatten (58) trägt, an denen jeweils eine Verbindungslasche (60) eines Steuerzylinders durch eine in der Baueinheit (28) vorgesehene Öffnung (62) befestigt ist.

8. Antriebskammer (100) nach Anspruch 7, wobei die beiden Verbindungslaschen (60) um 90° in Umfangsrichtung zueinander versetzt sind.

9. Antriebskammer (100) nach einem der Ansprüche 4 bis 8, wobei der Kühlkreislauf (14) umfasst:
- Kühlkanäle (76), die in der Dicke der Wand der Brennkammer (12) vorgesehen sind, in denen der erste Treibstoff (16) von unten nach oben strömt, wobei sich diese Kühlkanäle (76) zwischen dem unteren Ende (12ee) des divergierenden Teils (12e) der Brennkammer (12) und einem Satz von Injektoren (12b), die im oberen Teil der Brennkammer (12) angeordnet sind, erstrecken, und
- Versorgungskanäle (74) in der Dicke der Wand der Brennkammer (12), die sich in den divergierenden Teil (12e) der Brennkammer (12) erstrecken und in denen der erste Treibstoff (16) von oben nach unten fließt, wobei die Versorgungskanäle (74) an ihren oberen Enden (74a) durch Bohrungen (78) mit dem ringförmigen Hohlraum (44) und mit allen Kühlkanälen (76) durch ihre unteren Enden (74b) in Verbindung stehen.

10. Antriebskammer nach Anspruch 9, wobei die Versorgungskanäle (74) mit Ausstoßöffnungen (80) verbunden sind, die einen Fluss des ersten Treibstoffs (16) ermöglichen.

11. Antriebskammer nach einem der Ansprüche 1 bis 10, wobei eine Dichtung (72) zwischen einer Außenwand des divergierenden Teils (12e) der Brennkammer (12) und einer der thermostrukturellen Verbundwerkstoffhülle (24) zugewandten Innenwand angeordnet ist.

12. Antriebskammer (100) nach einem der Ansprüche 1 bis 11, wobei mindestens ein Teil der äußeren Verstärkungshülle (26) aus einer gewebten Anordnung von Kohlefasern gebildet ist, die in ein verfestigtes Harz eingebettet sind.

13. Antriebskammer nach einem der Ansprüche 1 bis 12, wobei mindestens ein Teil der äußeren Verstärkungshülle (26) aus einer Spule von Kohlefasern gebildet ist, die in einer verfestigten Harzbeschichtung enthalten sind.

14. Verfahren zur Herstellung einer Antriebskammer (100) für eine Rakete, **dadurch gekennzeichnet, dass** es die folgenden Schritte umfasst:
- Bilden einer einteiligen thermostrukturellen Verbundwerkstoffhülle (24) mit einer Kuppel (54a) und einem im Wesentlichen zylindrischen Abschnitt (54b), der durch einen kegelstumpfförmigen Abschnitt (54c) verlängert wird,
- Aushärten der Hülle (24),
- Herstellen einer äußeren Verstärkungshülle (26) mit hoher radialer Festigkeit auf einem Teil der thermostrukturellen Verbundmaterialhülle (24), wobei die thermostrukturelle Verbundmaterialhülle (24) und die äußere Verstärkungshülle (26) eine Baueinheit (28) bilden,
- Einsetzen einer Brennkammer (12) mit einem Kühlkreislauf (14) in die Baueinheit (28) durch einen divergenten Abschnitt (24c), der durch einen unteren Teil des kegelstumpfförmigen Abschnitts (54c) gebildet wird, und
- axiales Immobilisieren der Brennkammer (12) innerhalb der Baueinheit (28) mit einem Anschlag (70b), der die Brennkammer (12) abstützt und am oberen Teil des divergenten Abschnitts (24c) in dieser befestigt ist, wobei sich der divergente Abschnitt (24c) über ein unteres Ende eines divergierenden Teils (12e) der Brennkammer (12) hinaus erstreckt.

15. Verfahren zur Herstellung einer Antriebskammer (100) nach Anspruch 14, ferner umfassend den Schritt des Autoklavierens der Baueinheit (28).

16. Verfahren zur Herstellung einer Antriebskammer (100) nach Anspruch 14 oder 15, umfassend den Schritt des Verbindens eines Eingangsrohrs (30) eines ersten Triebstoffs (16) mit dem Kühlkreislauf (14) der Brennkammer (12) durch eine in der Baueinheit (28) vorgesehene Öffnung (42).

17. Verfahren zur Herstellung einer Antriebskammer (100) nach einem der Ansprüche 14 bis 16, wobei mindestens ein Teil der äußeren Verstärkungshülle (26) aus einer gewebten Anordnung von Kohlefasern gebildet wird, die in ein verfestigtes Harz eingebettet sind.

18. Verfahren zur Herstellung einer Antriebskammer (100) nach einem der Ansprüche 14 bis 17, wobei mindestens ein Teil der äußeren Verstärkungshülle (26) aus einer Spule von Kohlefasern gebildet wird, die in einer verfestigten Harzbeschichtung enthalten sind.

## Claims

1. A rocket propulsion chamber (100) comprising a combustion chamber (12), comprises in succession a dome (12a) for admitting a second propellant, a set of injectors (12b), a substantially cylindrical portion (12c) extended by a converging portion (12d) and by a diverging portion (12e), an inlet of the dome (12a) for admitting the second propellant constituting a top end (12aa) of the combustion chamber (12) and being connected to a feed duct (30) for the second propellant (22), a wall of the combustion chamber (12) having a cooling circuit (14) in which a first propellant (16) flows, with a single-piece thermostructural composite material shell (24) placed against the outside of said combustion chamber (12) and including a diverging nozzle (24c) extending beyond the bottom end (12ee) of the combustion chamber (12), at least a fraction of said thermostructural composite material shell (24) is covered in a radially strong outer reinforcing shell (26) for containing deformation of the combustion chamber (12) and of said thermostructural composite material shell (24), the thermostructural composite material shell (24) and the outer reinforcing shell (26) forming a unitary assembly (28), said combustion chamber (12) being **characterized in that** it bears against an abutment (70b) fastened to the inside of a top part of the diverging nozzle (24c), the propulsion chamber (100) being **characterized in that** the thermostructural composite material shell (24) also comprises a dome (54a) surmounting the dome (12a) of the combustion chamber (12) .

2. A combustion chamber (100) according to claim 1, wherein the combustion chamber (12) is held in said unitary assembly (28) between an abutment (70a) fastened to the top end (12aa) of the combustion chamber (12) through which said feed duct (30) for the second propellant (22) passes, bearing against the top of said unitary assembly (28), and the abutment (70b) fastened to the inside of the top part of the diverging nozzle (24c).

3. A propulsion chamber (100) according to any one of claims 1 or 2, wherein an inlet tube (40) for the first propellant (16) is connected to the cooling circuit (14) of the combustion chamber (12) and passes through an opening (42) formed in the unitary assembly (28).

4. A propulsion chamber (100) according to claim 3, wherein the inlet tube (40) for the first propellant (16) opens out into an annular cavity (44) having an inside face (44a) forming a portion of the wall of the combustion chamber (12) situated at the junction between the converging portion (12d) and the diverging portion (12e) of the combustion chamber (12).

5. A propulsion chamber (100) according to claim 4, wherein the annular cavity (44) is closed by a shroud (46) that is fastened via its two axial ends (46a, 46b) to the wall of the combustion chamber (12), the shroud (46) being surrounded by the unitary assembly (28) and being pierced to pass the end of the inlet tube (40) for the first propellant (16).

6. A propulsion chamber (100) according to claim 5, wherein the shroud (46) carries internally a fastener plate (48) having connected thereto the end of the inlet tube (40) for the first propellant (16), the fastener plate (48) including an opening (48a) for passing the first propellant (16).

7. A propulsion chamber (100) according to claim 5 or claim 6, wherein the shroud (46) carries internally at least two bases (58), each of which has a respective connection tab (60) of a control actuator fastened thereto through a respective opening (62) formed in the unitary assembly (28).

8. A propulsion chamber (100) according to claim 7, wherein the two connection tabs (60) are offset circumferentially from each other by 90°.

9. A propulsion chamber (100) according to any one of claims 4 to 8, wherein the cooling circuit (14) comprises:
• cooling channels (76) formed in the thickness of the wall of the combustion chamber (12), in which the first propellant (16) flows upwards, these cooling channels (76) extending between the bottom end (12ee) of the diverging portion (12e) of the combustion chamber (12) and a set of injectors (12b) arranged in the top portion of the combustion chamber (12); and
• feed channels (74) in the thickness of the wall of the combustion chamber (12) extending in the diverging portion (12e) of the combustion chamber (12) and in which the first propellant (16) flows downwards, said feed channels (74) communicating at their top ends (74a) via holes (78) with the annular cavity (44), and via their bottom ends (74b) with the set of cooling channels (76).

10. A propulsion chamber according to claim 9, wherein the feed channels (74) communicate with ejection orifices (80) for passing a flow of the first propellant (16).

11. A propulsion chamber according to any one of claims 1 to 10, wherein a sealing gasket (72) is arranged between an outer wall of the diverging portion (12e) of the combustion chamber (12) and a facing inside wall of the thermostructural composite material shell (24).

12. A propulsion chamber (100) according to any one of claims 1 to 11, wherein at least a portion of the outer reinforcing shell (26) is formed by a woven fabric of carbon fibers coated in a solidified resin.

13. A propulsion chamber according to any one of claims 1 to 12, wherein at least a portion of the outer reinforcing shell (26) is formed by a winding of carbon fibers included in a coating of solidified resin.

14. A method of fabricating a rocket propulsion chamber (100), the method being **characterized in that** it comprises the following steps:
• shaping a single-piece shell (24) made of thermostructural composite material and comprising a dome (54a) and a substantially cylindrical segment (54b) that is extended by a frustoconical segment (54c);
• hardening said shell (24);
• making a radially strong outer reinforcing shell (26) on a portion of said thermostructural composite material shell (24), the thermostructural composite material shell (24) and the outer reinforcing shell (26) forming a unitary assembly (28);
• inserting a combustion chamber (12) having a cooling circuit (14) into the unitary assembly (28) via a diverging nozzle (24c) constituted by a bottom portion of said frustoconical segment (54c); and
• holding the combustion chamber (12) axially inside the unitary assembly (28) with an abutment (70b) providing a bearing surface for said combustion chamber (12) and fastened to the inside of the top part of said diverging nozzle (24c), said diverging nozzle (24c) extending beyond a bottom end of a diverging portion (12e) of the combustion chamber (12).

15. A method of fabricating a propulsion chamber (100) according to claim 14, further including the step of treating the unitary assembly (28) in an autoclave.

16. A method of fabricating a propulsion chamber (100) according to claim 14 or claim 15, including the step of connecting an inlet tube (30) for a first propellant (16) to the cooling circuit (14) of the combustion chamber (12) through an opening (42) formed in the unitary assembly (28).

17. A method of fabricating a propulsion chamber (100) according to any one of claims 14 to 16, wherein at least a portion of the outer reinforcing shell (26) is formed by a woven fabric of carbon fibers coated in a solidified resin.

18. A method of fabricating a propulsion chamber (100) according to any one of claims 14 to 17, wherein at least a portion of the outer reinforcing shell (26) is formed by a winding of carbon fibers included in a coating of solidified resin.
